# FASCICULE DE BREVET EUROPEEN

(11) **EP 0 571 241 B1**
(45) Date de publication et mention de la délivrance du brevet: **13.08.1997**
(21) Numéro de dépôt: 93401143.8
(22) Date de dépôt: 04.05.1993
(51) Int. Cl.: C08L 77/00, C08K 3/22, C08K 13/02

(54) **Compositions thermoplastiques ignifuges, leur procédé de préparation**
Flammhemmende thermoplastische Formassen und Herstellungsverfahren
Thermoplastic flame-resistant compositions and method of producing the same

(30) Priorité: 22.05.1992 FR 9206309
(43) Date de publication de la demande: 24.11.1993
(73) Titulaire: ELF ATOCHEM S.A., 92800 Puteaux (FR)
(72) Inventeur: Jouslin de Noray, Eric, F-51170 Serzy et Prin (FR); Augustin, Madeleine, F-27470 Serquigny (FR)
(74) Mandataire: Luziau, Nelly

(56) Documents cités:
- EP-A- 502 414
- EP-A- 0 335 165
- WO-A-88/09041
- DATABASE WPIL Week 8831, 28 Septembre 1988 Derwent Publications Ltd., London, GB; AN 88-215563/31 & JP-A-63 150 349
- PATENT ABSTRACTS OF JAPAN vol. 12, no. 306 (C-522)(3153) 19 Août 1988 & JP-A-63 77 971

## Description

La présente invention a pour objet des compositions thermoplastiques ignifuges à base de polyamide présentant de bonnes caractéristiques mécaniques et notamment une bonne résistance au choc.

On connaît dans la littérature des compositions ignifuges à base de polyamide contenant soit des composés halogénés tels que décabromodiphényléther, décabromodiphényle, paraffines chlorées soit des dérivés du phosphore tels que phosphates, phosphites, phosphore rouge (brevet US 3 778 407). Les agents retardateurs de combustion à base de composés halogénés sont générateurs d'acides halogénés qui se dégagent lors de la fabrication ou de l'utilisation des polyamides ainsi chargés, entraînant des risques de corrosion des appareillages et des nuisances pour l'environnement. Les dérivés du phosphore sont en général d'emploi peu simple et confèrent souvent une teinte rougeâtre aux polyamides auxquels ils sont incorporés.

On a également proposé l'utilisation de cyanurate de mélamine (brevet EP 19 768) mais ce composé n'est pas aussi efficace, à poids égal, que certains composés à haute teneur en chlore ou en brome. On peut aussi citer EP 169 085 qui décrit des compositions polyamides à combustibilité retardée contenant du cyanurate de mélamine et un polyol.

EP 335 165 concerne des compositions de polyamide renforcées à combustibilité retardée contenant Mg(OH)₂ lamellaire et un (co)polymère d'oléfine fonctionnalisé.

EP 502 474 décrit des compositions ignifuges comprenant une polyoléfine, une résine de polyamide, une polyoléfine modifiée, un oxyde métallique hydraté, de l'oxyde d'antimoine et des fibres de verre.

WO 88/09041 a pour objet des lignes de transmission telles que fils et câbles électriques, fibres optiques, munies d'une enveloppe isolante ou d'une enveloppe de protection formée d'une composition comprenant un polyamide, un polyester, un oxyde de polyphényléne, un polymère de silicone ou un copolymère d'alcène et d'acétate de vinyle, de l'hydroxyde de magnésium et éventuellement des composés halogénés en combinaison avec de l'oxyde d'antimoine.

Les compositions ignifuges selon l'invention qui ne contiennent ni composés halogénés, ni dérivés du phosphore, ne présentent pas les inconvénients des compositions connues mais ont très souvent une meilleure résistance au feu et des propriétés mécaniques meilleures que les compositions de l'état de la technique ; elles comprennent un mélange de polyamide(s), de Sb₂O₃ et/ou de cyanurate de mélamine et de Mg(OH)₂.

Des compositions ignifuges selon l'invention comprennent avantageusement :
- 280 à 750 parties en poids de polyamide(s),
- 10 à 120 parties en poids de Sb₂O₃ et/ou de cyanurate de mélamine,
- 100 à 600 parties en poids de Mg(OH)₂,
la somme des constituants ci-dessus étant égale à 1000.

Les compositions de l'invention peuvent en outre contenir des fibres de verre, des charges minérales et des additifs tels que colorants, lubrifiants stabilisants à la chaleur, à la lumière, antioxydants, plastifiants, agents améliorant la résistance au choc, anti UV, antistatiques et/ou pigments.

Les compositions selon l'invention peuvent aussi contenir :
- 0 à 300 parties en poids de fibres de verre,
- 0 à 150 parties en poids de charge(s) minérales,
- 0 à 70 parties en poids pour la totalité des additif(s).
la somme de tous les constituants de ces compositions étant égale à 1000.

Par polyamides, on entend notamment les polymères obtenus essentiellement :
◆ par polymérisation anionique d'un ou plusieurs lactames tels que caprolactame, oenantholactame, dodécalactame, etc...
◆ ou par polycondensation hydrolytique

soit desdits lactames,
soit d'un ou plusieurs amino-acides tes que les acide aminocaproïque, amino-7 heptanoïque, amino-11 undécanoïque, amino-12 dodécanoïque
soit d'une ou plusieurs diamines telles que l'hexaméthylènediamine, la dodécaméthylènediamine, la métaxylylènediamine, le bis-p aminocyclohexylméthane, la triméthylhexaméthylènediamine, ou leurs sels avec un ou plusieurs diacides tels que les acides iso-, téréphtalique, adipique, azélaïque, subérique, sébacique, dodécanedcarboxylique, ou leurs sels,
soit des mélanges de tous ces monomères, ce qui conduit à des copolyamides.

Parmi les polyamides décrits ci-dessus, on peut citer :
◆ les polyamides aliphatiques et notamment les PA-6, PA-6,6, PA-4,6, PA11, PA-12, PA-12,12,
◆ les polyamides semi-aromatiques (PASA) constitués de segments aliphatiques et de segments aromatiques et cycloaliphatiques et plus particulièrement ceux décrits dans EP 313.436 obtenus à partir :
   - d'au moins un lactame et/ou un aminoacide, de préférence le dodécalactame,
   - d'acides téré- et isophtalique
   - d'au moins une diamine cycloaliphatique, de préférence le bis(4-aminocyclohexyl) méthane,
◆ les élastomères thermoplastiques à base de polyamide tels que ceux décrits dans les brevets FR 2.273.021, FR 2.401.947 et FR 2.384.810.

Par polyamides, on entend également les mélanges et/ou alliages des polyamides ci-dessus avec d'autres polymères thermoplastiques et notamment les polyoléfines telles que PP, PE, EPR, EPDM, éventuellement maléisées. On citera tout particulièrement les alliages décrits dans le brevet FR 2.629.090.

Le ou les polyamides utilisés ont en général une viscosité inhérente comprise entre 0,90 et 2,00 mesurée pour un échantillon de 150 mg dissout dans 30 g de méta-crésol à 20°C.

Par cyanurate de mélamine, on entend les composés résultant de l'action de la mélamine sur l'acide cyanurique, et particulièrement le composé résultant de la réaction équimolaire de la mélamine sur l'acide cyanurique, ce dernier pouvant être sous la forme énol ou céto.

Les fibres de verre mises en oeuvre dans les compositions selon l'invention ont en général une longueur moyenne comprise entre 3 et 5 mm et un diamètre moyen compris entre 8 et 15 µm.

Les charges minérales mises en oeuvre dans les compositions selon l'invention peuvent être choisies parmi les charges habituellement rencontrées et sont de préférence des charges minérales telles que le mica, la wollastonite, le talc, les billes de verre pleines ou creuses, CaCO₃.

Les compositions ignifuges selon l'invention peuvent être préparées par mélange des différents constituants sous forme pulvérulente ou dry-blend, à l'exception du polyamide sous forme de granulés et des fibres de verre. La granulométrie moyenne de ces constituants est en général comprise entre 0,1 et 100 µm et de préférence entre 1 et 60 µm. La taille des granulés de polyamide est en général comprise entre 1,5 et 4 mm.

Une fois le mélange intime des constituants effectué, il est introduit avec les granulés de polyamide(s) dans la trémie d'une extrudeuse. Les fibres de verre sont introduites au sein de l'extrudeuse au niveau de la matière fondue. Pour des compositions à base de PA-6, la température en sortie d'extrudeuse est d'environ 235°C.

Il est aussi possible de préparer les compositions selon l'invention en formant un mélange comprenant une partie seulement des constituants pulvérulents (Sb₂O₃, Mg(OH)₂, charges minérales, additifs), en introduisant ce mélange dans la trémie de l'extrudeuse en même temps que les granulés de polyamide, puis en ajoutant le reste des constituants pulvérulents dans la zone de l'extrudeuse où la matière est fondue avant, après ou en même temps que les fibres de verre.

Les compositions selon l'invention, seules ou en mélange avec d'autres polymères, sont particulièrement aptes à la réalisation d'objets moulés ou extrudés, de films, de fibres, de matériaux composites présentant de bonnes propriétés mécaniques. Lesdites compositions conviennent particulièrement bien pour la réalisation d'éléments d'appareillages électriques et notamment de boîtiers d'arc.

Les exemples suivants illustrent l'invention sans la limiter.

### Exemple 1

Dans un mélangeur mécanique, on introduit :
- 350 parties en poids de Mg(OH)₂ de granulométrie moyenne inférieure à 1 µm,
- 50 parties en poids de Sb₂O₃ de granulométrie moyenne comprise entre 1 et 2 µm,
- 20 parties en poids de colorant noir, d'agents lubrifiants et stabilisants à la lumière et à la chaleur dont la granulométrie moyenne est égale à environ 50 µm.

On alimente une extrudeuse avec le mélange pulvérulent précédent ainsi qu'avec 330 parties en poids de PA-6 de Melt Flow Index 17-23 (mesuré selon la norme ASTM D 1238 (235°C, 2,16 kg, diamètre filière : 2 mm) et de viscosité inhérente 1,15-1,30 sous forme de granulés de taille inférieure ou égale à 4 mm et avec 250 parties en poids de fibres de verre de longueur moyenne d'environ 4,5 mm et de diamètre moyen d'environ 10 µm incorporées au sein de la matière fondue.

En sortie d'extrudeuse, la température-matière est de 235°C. Les joncs extrudés sont refroidis dans l'eau froide puis découpés en granulés à partir desquels on moule par injection des éprouvettes sur lesquelles on pratique le test de combustibilité UL 94 selon la norme ASTM D 635. On mesure également le module de flexion selon la norme ISO 178 et la résistance au choc sans entaille à 20°C selon la norme ISO 179.

Les résultats sont réunis dans le tableau ci-après.

### Exemples 2 et 3 (Comparatifs)

Dans les conditions de l'Exemple 1, on extrude des compositions à base de PA-6 de mêmes caractéristiques dont les proportions des différents constituants sont indiquées dans le tableau ci-après ainsi que les résultats du test de combustibilité UL 94.

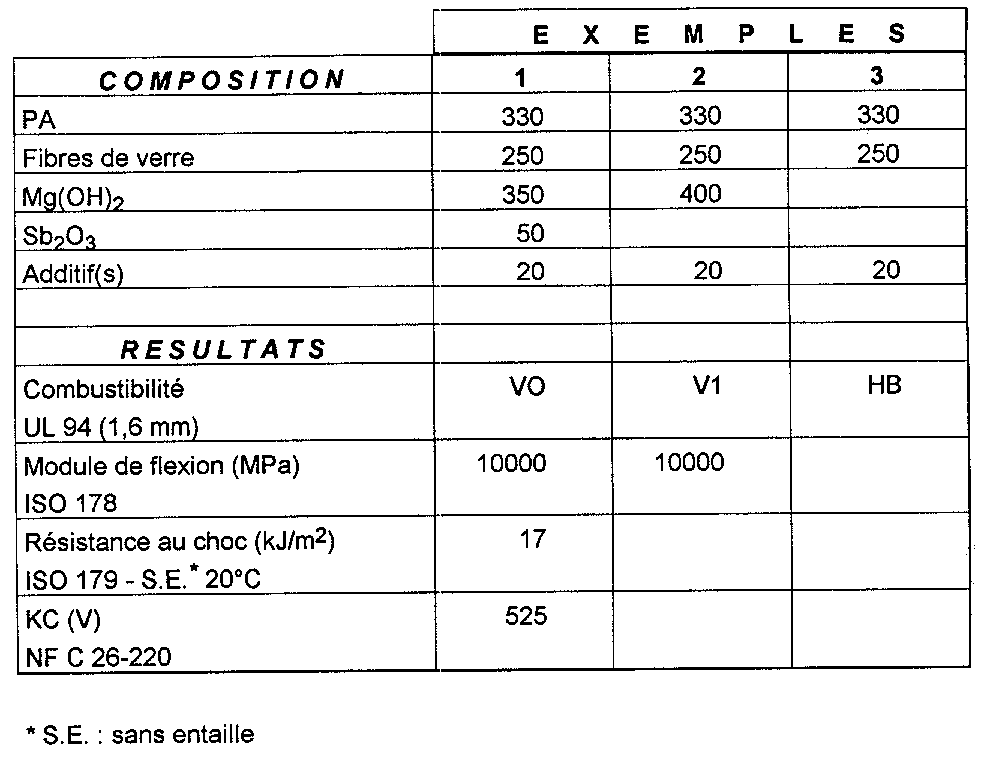

### Exemple 4

On opère à partir des mêmes constituants que ceux de l'exemple 1. Cependant, le mélange pulvérulent introduit dans l'extrudeuse avec les granulés de polyamide ne contient que 200 parties en poids de Mg(OH)₂. Les 150 parties de Mg(OH)₂ restantes sont introduites dans la matière fondue en même temps que les fibres de verre.

On prépare des éprouvettes, on réalise le test de combustibilité et on mesure le module de flexion et la résistance au choc comme à l'exemple 1. Les résultats sont les suivants :
◆ Combustibilité: : VO
◆ Module de flexion : 10 000 MPa
◆ Résistance au choc : 11,6 KJ/m²

## Revendications (Revendications pour l'(les) Etat(s) contractant(s) suivant(s): AT, DK, ES, GR, LU, PT, IE)

1. Compositions thermoplastiques ignifuges, caractérisées en ce qu'elles comprennent un mélange de polyamide(s), de Sb₂O₃ et/ou de cyanurate de mélamine et de Mg(OH)₂ et ne contiennent ni composés halogénés, ni dérivés du phosphore.

2. Compositions thermoplastiques selon la revendication 1 caractérisées en ce qu'elles comprennent:
- 280 à 750 parties en poids de polyamide(s),
- 10 à 120 parties en poids de Sb₂O₃ et/ou de cyanurate de mélamine,
- 100 à 600 parties en poids de Mg(OH)₂,
la somme des constituants ci-dessus étant égale à 1000.

3. Compositions thermoplastiques ignifuges conformes à la revendication 2, caractérisées en ce qu'elles comprennent en outre :
- 0 à 300 parties en poids de fibres de verre,
- 0 à 150 parties en poids de charge(s) minérale(s),
- 0 à 70 parties en poids d'additif(s),
la somme de tous les constituants de ces compositions étant égale à 1000.

4. Compositions thermoplastiques conforme à la revendication 3, caractérisées en ce que les additifs sont choisis parmi les colorant(s), lubrifiant(s), stabilisants à la chaleur, à la lumière, antioxydants, plastifiants, agents améliorant la résistance au choc, anti UV, antistatiques et/ou pigments.

5. Compositions thermoplastiques ignifuges selon l'une des revendications 1 et 2, caractérisées en ce que le ou les polyamide(s) est aliphatique et de préférence PA-6, PA-6,6, PA-4,6, PA-11, PA-12, PA-12,12.

6. Compositions thermoplastiques ignifuges selon l'une des revendications 1 et 2, caractérisées en ce que le ou les polyamide(s) est constitué de segments aliphatiques, aromatiques et cycloaliphatiques et de préférence est obtenu à partir :
- d'au moins un lactame et/ou un aminoacide -de préférence le dodécalactame ;
- d'acides téré- et isophtalique ;
- d'au moins une diamine cycloaliphatique, de préférence le bis(4-aminocyclohexyl) méthane.

7. Compositions thermoplastiques ignifuges selon l'une des revendications 1 et 2, caractérisées en ce que le ou les polyamide(s) est un élastomère thermoplastique à base de polyamide.

8. Compositions thermoplastiques ignifuges selon l'une quelconque des revendications 1 à 7, caractérisés en ce que le polyamide est un mélange et/ou alliage de polyamide(s) avec un ou plusieurs polymères thermoplastiques et notamment les polyoléfines telles que PP, PE, EPR, EPDM, éventuellement maléisées.

9. Compositions thermoplastiques ignifuges selon l'une quelconque des revendications 2 à 8, caractérisés en ce qu'elles comprennent :
- 300 à 450 parties en poids de polyamide(s), de préférence PA-6,
- 20 à 60 parties en poids de Sb₂O₃ et/ou de cyanurate de mélamine,
- 300 à 500 parties en poids de Mg(OH)₂,
- 150 à 300 parties en poids de fibres de verre,
- 0 à 150 parties en poids de charge(s) minérale(s),
- 10 à 30 parties en poids d'additif(s),
la somme des constituants ci-dessus étant égale à 1000.

10. Procédé de préparation des compositions des revendications 1 à 9, caractérisé en ce qu'on mélange les différents constituants sous forme pulvérulente ou dry-blend, on introduit ce mélange et les granulés de polyamide(s) dans l'extrudeuse, puis on incorpore éventuellement les fibres de verre dans l'extrudeuse au sein de la matière fondue.

11. Procédé conforme à la revendication 10, caractérisé en ce que l'on introduit un mélange comprenant une partie seulement des constituants sous forme pulvérulente dans l'extrudeuse, en même temps que les granulés de polyamide(s), puis on incorpore le restant des constituants sous forme pulvérulente dans la matière fondue avant, après ou en même temps que les fibres de verre.

12. Procédé conforme à la revendication 11, caractérisé en ce que l'on incorpore le Mg(OH)₂ en deux fois, la première avec le polyamide et la deuxième avec les fibres de verre.

13. Utilisation des compositions thermoplastiques ignifuges des revendications 1 à 6 seules ou en mélange avec d'autres polymères, pour la réalisation d'objets moulés ou extrudés, de films, de fibres, de matériaux composites et notamment pour la réalisation d'éléments d'appareillages électriques et notamment boîtiers d'arc.

## Revendications (Revendications pour l'(les) Etat(s) contractant(s) suivant(s): BE, CH, DE, FR, GB, IT, LI, NL, SE)

1. Compositions thermoplastiques ignifuges, caractérisées en ce qu'elles comprennent un mélange de polyamide(s), de Sb₂O₃ et/ou de cyanurate de mélamine et de Mg(OH)₂,
ne contiennent ni composés halogénés, ni dérivés du phosphore,
la composition constituée d'un mélange
- de 52 parties en poids de polypropylène de melt index 9 g/10 min et de PA-6 de viscosité relative 2,2 de rapport pondéral PP/PA 70130
- de 3 parties en poids de polypropylène modifié POLYTAC® H-1100P
- de 40 parties en poids de Mg(OH)₂
- de 5 parties en poids de Sb₂O₃
- et de 40 parties en poids de fibres de verre
étant exclue.

2. Compositions thermoplastiques selon la revendication 1 caractérisées en ce qu'elles comprennent :
- 280 à 750 parties en poids de polyamide(s),
- 10 à 120 parties en poids de Sb₂O₃ et/ou de cyanurate de mélamine,
- 100 à 600 parties en poids de Mg(OH)₂,
la somme des constituants ci-dessus étant égale à 1000.

3. Compositions thermoplastiques ignifuges conformes à la revendication 2, caractérisées en ce qu'elles comprennent en outre :
- 0 à 300 parties en poids de fibres de verre,
- 0 à 150 parties en poids de charge(s) minérale(s),
- 0 à 70 parties en poids d'additif(s),
la somme de tous les constituants de ces compositions étant égale à 1000.

4. Compositions thermoplastiques conforme à la revendication 3, caractérisées en ce que les additifs sont choisis parmi les colorant(s), lubrifiant(s), stabilisants à la chaleur, à la lumière, antioxydants, plastifiants, agents améliorant la résistance au choc, anti UV, antistatiques et/ou pigments.

5. Compositions thermoplastiques ignifuges selon l'une des revendications 1 et 2, caractérisées en ce que le ou les polyamide(s) est aliphatique et de préférence PA-6, PA-6,6, PA-4,6, PA-11, PA-12, PA-12,12.

6. Compositions thermoplastiques ignifuges selon l'une des revendications 1 et 2, caractérisées en ce que le ou les polyamide(s) est constitué de segments aliphatiques, aromatiques et cycloaliphatiques et de préférence est obtenu à partir :
- d'au moins un lactame et/ou un aminoacide -de préférence le dodécalactame ;
- d'acides téré- et isophtalique ;
- d'au moins une diamine cycloaliphatique, de préférence le bis(4-aminocyclohexyl) méthane.

7. Compositions thermoplastiques ignifuges selon l'une des revendications 1 et 2, caractérisées en ce que le ou les polyamide(s) est un élastomère thermoplastique à base de polyamide.

8. Compositions thermoplastiques ignifuges selon l'une quelconque des revendications 1 à 7, caractérisés en ce que le polyamide est un mélange et/ou alliage de polyamide(s) avec un ou plusieurs polymères thermoplastiques et notamment les polyoléfines telles que PP, PE, EPR, EPDM, éventuellement maléisées.

9. Compositions thermoplastiques ignifuges selon l'une quelconque des revendications 2 à 8, caractérisés en ce qu'elles comprennent :
- 300 à 450 parties en poids de polyamide(s), de préférence PA-6,
- 20 à 60 parties en poids de Sb₂O₃ et/ou de cyanurate de mélamine,
- 300 à 500 parties en poids de Mg(OH)₂,
- 150 à 300 parties en poids de fibres de verre,
- 0 à 150 parties en poids de charge(s) minérale(s),
- 10 à 30 parties en poids d'additif(s),
la somme des constituants ci-dessus étant égale à 1000.

10. Procédé de préparation des compositions des revendications 1 à 9, caractérisé en ce qu'on mélange les différents constituants sous forme pulvérulente ou dry-blend, on introduit ce mélange et les granulés de polyamide(s) dans l'extrudeuse, puis on incorpore éventuellement les fibres de verre dans l'extrudeuse au sein de la matière fondue.

11. Procédé conforme à la revendication 10, caractérisé en ce que l'on introduit un mélange comprenant une partie seulement des constituants sous forme pulvérulente dans l'extrudeuse, en même temps que les granulés de polyamide(s), puis on incorpore le restant des constituants sous forme pulvérulente dans la matière fondue avant, après ou en même temps que les fibres de verre.

12. Procédé conforme à la revendication 11, caractérisé en ce que l'on incorpore le Mg(OH)₂ en deux fois, la première avec le polyamide et la deuxième avec les fibres de verre.

13. Utilisation des compositions thermoplastiques ignifuges des revendications 1 à 6 seules ou en mélange avec d'autres polymères, pour la réalisation d'objets moulés ou extrudés, de films, de fibres, de matériaux composites et notamment pour la réalisation d'éléments d'appareillages électriques et notamment boîtiers d'arc.

## Patentansprüche (Patentansprüche für folgende(n) Vertragsstaat(en): AT, DK, ES, GR, LU, PT, IE)

1. Flammenhemmende thermoplastische Zusammensetzungen, dadurch gekennzeichnet, daß sie eine Mischung von Polyamid(en), Sb₂O₃ und/oder Melamincyanurat und Mg(OH)₂ umfassen und sie weder Halogenverbindungen noch Phosphorderivate enthalten.

2. Thermoplastische Zusammensetzungen nach Anspruch 1, dadurch gekennzeichnet, daß sie enthalten:
- 280 bis 750 Gewichtsteile Polyamid(e),
- 10 bis 120 Gewichtsteile Sb₂O₃ und/oder Melamincyanurat und
- 100 bis 600 Gewichtsteile Mg(OH)₂,
wobei die Summe der zuvor genannten Bestandteile gleich 1000 ist.

3. Flammwidrige (flammenverzögernde) thermoplastische Zusammensetzungen nach Anspruch 2, dadurch gekennzeichnet, daß sie außerdem enthalten:
- 0 bis 300 Gewichtsteile Glasfasem,
- 0 bis 150 Gewichtsteile mineralische(n) Füllstoff(e) und
- 0 bis 70 Gewichtsteile Additiv(e),
wobei die Summe aller Bestandteile dieser Zusammensetzungen gleich 1000 ist.

4. Thermoplastische Zusammensetzungen nach Anspruch 3, dadurch gekennzeichnet, daß die Additive ausgewählt sind aus Färbemittel(n), Schmier- bzw. Gleitmittel(n), Wärmestabilisatoren, Lichtstabilisatoren, Antioxidantien, Weichmachern, schlagzähigkeitsverbessernden Reagenzien, Anti-UV-Substanzen, antistatischen Substanzen und/oder Pigmenten.

5. Flammenhemmende thermoplastische Zusammensetzungen nach Anspruch 1 oder 2, dadurch gekennzeichnet, daß das oder die Polyamide aliphatisch sind, vorzugsweise PA-6, PA-6,6, PA-4,6, PA-11, PA-12 und PA-12,12.

6. Flammenhemmende thermoplastische Zusammensetzungen nach Anspruch 1 oder 2, dadurch gekennzeichnet, daß das oder die Polyamide aus cycloaliphatischen, aromatischen und aliphatischen Abschnitten bestehen und vorzugsweise erhalten werden ausgehend von:
- mindestens einem Lactam und/oder einer Aminosäure, vorzugsweise Dodekalactam;
- Terephthal- und Isophthalsäure;
- mindestens einem cycloaliphatischen Diamin, vorzugsweise Bis-(4-aminocyclohexyl)methan.

7. Flammenhemmende thermoplastische Zusammensetzungen nach Anspruch 1 oder 2, dadurch gekennzeichnet, daß das oder die Polyamide thermoplastische Elastomere auf Basis von Polyamid sind.

8. Flammenhemmende thermoplastische Zusammensetzungen nach einem der Ansprüche 1 bis 7, dadurch gekennzeichnet, daß das Polyamid eine Mischung und/oder ein Gemenge von Polyamid(en) mit einem oder mehreren thermoplastischen Polymeren ist, insbesondere Polyolefinen wie PP, PE, EPR, EPDM, die gegebenenfalls maleinisiert sind.

9. Flammenhemmende thermoplastische Zusammensetzungen nach einem der Ansprüche 2 bis 8, dadurch gekennzeichnet, daß sie enthalten:
- 300 bis 450 Gewichtsteile Polyamid(e), vorzugsweise PA-6,
- 20 bis 60 Gewichtsteile Sb₂O₃ und/oder Melamincyanurat,
- 300 bis 500 Gewichtsteile Mg(OH)₂,
- 150 bis 300 Gewichtsteile Glasfasern,
- 0 bis 150 Gewichtsteile mineralische(n) Füllstoff(e),
- 10 bis 30 Gewichtsteile Additiv(e),
wobei die Summe der zuvor genannten Bestandteile gleich 1000 ist.

10. Verfahren zur Herstellung von Verbindungen nach den Ansprüchen 1 bis 9, dadurch gekennzeichnet, daß man die verschiedenen Bestandteile in pulverförmiger Form oder als Trockenmischung (Dry-blend) mischt, diese Mischung und das Polyamidgranulat in einen Extruder einbringt und dann gegebenenfalls die Glasfasern der geschmolzenen Masse in dem Extruder zusetzt.

11. Verfahren nach Anspruch 10, dadurch gekennzeichnet, daß man in den Extruder gleichzeitig mit dem Polyamidgranulat eine Mischung einbringt, die einen Teil nur Bestandteile in pulverförmiger Form enthält und man dann den Rest der Bestandteile in pulverförmiger Form in die geschmolzene Masse vor, nach oder gleichzeitig mit den Glasfasem einbringt.

12. Verfahren nach Anspruch 11, dadurch gekennzeichnet, daß man das Mg(OH)₂ in zwei Chargen einbringt, die erste Charge zusammen mit dem Polyamid und die zweite Charge zusammen mit den Glasfasern.

13. Verwendung von flammenhemmenden thermoplastischen Zusammensetzungen nach den Ansprüchen 1 bis 6, entweder allein oder in Mischung mit anderen Polymeren, zur Herstellung von Formteilen oder extrudierten Gegenständen, Filmen, Fasern, Verbundmaterialien und insbesondere zur Herstellung von Bestandteilen elektrischer Apparaturen, insbesondere Lichtbogenkammern.

## Patentansprüche (Patentansprüche für folgende(n) Vertragsstaat(en): BE, CH, DE, FR, GB, IT, LI, NL, SE)

1. Flammenhemmende thermoplastische Zusammensetzungen, dadurch gekennzeichnet, daß sie eine Mischung von Polyamid(en), Sb₂O₃ und/oder Melamincyanurat und Mg(OH)₂ umfassen und sie weder halogenhaltige Verbindungen noch Phosphorderivate enthalten,
ausgenommen eine Zusammensetzung, die aus einer Mischung von
- 52 Gewichtsteilen Polypropylen mit einem Schmelzindex von 9 g/10 min und PA-6 mit einer relativen Viskosität von 2,2 mit einem Gewichtsverhältnis PP/PA von 70/30,
- 3 Gewichtsteilen modifiziertem Polypropylen POLYTAC® H-1100P,
- 40 Gewichtsteilen Mg(OH)₂,
- 5 Gewichtsteilen Sb₂O₃ und
- 40 Gewichtsteilen Glasfasern
besteht.

2. Thermoplastische Zusammensetzungen nach Anspruch 1, dadurch gekennzeichnet, daß sie enthalten:
- 280 bis 750 Gewichtsteile Polyamid(e),
- 10 bis 120 Gewichtsteile Sb₂O₃ und/oder Melamincyanurat und
- 100 bis 600 Gewichtsteile Mg(OH)₂,
wobei die Summe der zuvor genannten Bestandteile gleich 1000 ist.

3. Flammwidrige (flammenverzögernde) thermoplastische Zusammensetzungen nach Anspruch 2, dadurch gekennzeichnet, daß sie außerdem enthalten:
- 0 bis 300 Gewichtsteile Glasfasern,
- 0 bis 150 Gewichtsteile mineralische(n) Füllstoff(e) und
- 0 bis 70 Gewichtsteile Additiv(e),
wobei die Summe aller Bestandteile dieser Zusammensetzungen gleich 1000 ist.

4. Thermoplastische Zusammensetzungen nach Anspruch 3, dadurch gekennzeichnet, daß die Additive ausgewählt sind aus Färbemittel(n), Schmier- bzw. Gleitmittel(n), Wärmestabilisatoren, Lichtstabilisatoren, Antioxidantien, Weichmachern, schlagzähigkeitsverbessernden Reagenzien, Anti-UV-Substanzen, antistatischen Substanzen und/oder Pigmenten.

5. Flammenhemmende thermoplastische Zusammensetzungen nach Anspruch 1 oder 2, dadurch gekennzeichnet, daß das oder die Polyamide aliphatisch sind, vorzugsweise PA-6, PA-6,6, PA-4,6, PA-11, PA-12 und PA-12,12.

6. Flammenhemmende thermoplastische Zusammensetzungen nach Anspruch 1 oder 2, dadurch gekennzeichnet, daß das oder die Polyamide aus cycloaliphatischen, aromatischen und aliphatischen Abschnitten bestehen und vorzugsweise erhalten werden ausgehend von:
- mindestens einem Lactam und/oder einer Aminosäure, vorzugsweise Dodekalactam;
- Terephthal- und Isophthalsäure;
- mindestens einem cycloaliphatischen Diamin, vorzugsweise Bis(4-aminocyclohexyl)methan.

7. Flammenhemmende thermoplastische Zusammensetzungen nach Anspruch 1 oder 2, dadurch gekennzeichnet, daß das oder die Polyamide thermoplastische Elastomere auf Basis von Polyamid sind.

8. Flammenhemmende thermoplastische Zusammensetzungen nach einem der Ansprüche 1 bis 7, dadurch gekennzeichnet, daß das Polyamid eine Mischung und/oder ein Gemenge von Polyamid(en) mit einem oder mehreren thermoplastischen Polymeren ist, insbesondere Polyolefinen wie PP, PE, EPR, EPDM, die gegebenenfalls maleinisiert sind.

9. Flammenhemmende thermoplastische Zusammensetzungen nach einem der Ansprüche 2 bis 8, dadurch gekennzeichnet, daß sie enthalten:
- 300 bis 450 Gewichtsteile Polyamid(e), vorzugsweise PA-6,
- 20 bis 60 Gewichtsteile Sb₂O₃ und/oder Melamincyanurat,
- 300 bis 500 Gewichtsteile Mg(OH)₂,
- 150 bis 300 Gewichtsteile Glasfasern,
- 0 bis 150 Gewichtsteile mineralische(n) Füllstoff(e),
- 10 bis 30 Gewichtsteile Additiv(e),
wobei die Summe der zuvor genannten Bestandteile gleich 1000 ist.

10. Verfahren zur Herstellung von Verbindungen nach den Ansprüchen 1 bis 9, dadurch gekennzeichnet, daß man die verschiedenen Bestandteile in pulverförmiger Form oder als Trockenmischung (Dry-blend) mischt, diese Mischung und das Polyamidgranulat in einen Extruder einbringt und dann gegebenenfalls die Glasfasern der geschmolzenen Masse in dem Extruder zusetzt.

11. Verfahren nach Anspruch 10, dadurch gekennzeichnet, daß man in den Extruder gleichzeitig mit dem Polyamidgranulat eine Mischung einbringt, die einen Teil nur Bestandteile in pulverförmiger Form enthält und man dann den Rest der Bestandteile in pulverförmiger Form in die geschmolzene Masse vor, nach oder gleichzeitig mit den Glasfasern einbringt.

12. Verfahren nach Anspruch 11, dadurch gekennzeichnet, daß man das Mg(OH)₂ in zwei Chargen einbringt, die erste Charge zusammen mit dem Polyamid und die zweite Charge zusammen mit den Glasfasern.

13. Verwendung von flammenhemmenden thermoplastischen Zusammensetzungen nach den Ansprüchen 1 bis 6, entweder allein oder in Mischung mit anderen Polymeren, zur Herstellung von Formteilen oder extrudierten Gegenständen, Filmen, Fasern, Verbundmaterialien und insbesondere zur Herstellung von Bestandteilen elektrischer Apparaturen, insbesondere Lichtbogenkammern.

## Claims (Claims for the following Contracting State(s): AT, DK, ES, GR, LU, PT, IE)

1. Flame-retardant thermoplastic compositions, characterised in that they comprise a mixture of polyamide(s), of Sb₂O₃ and/or of melamine cyanurate and of Mg(OH)₂ and contain neither halogenated compounds nor phosphorous derivatives.

2. Thermoplastic compositions according to Claim 1, characterised in that they comprise:
- 280 to 750 parts by weight of polyamide(s),
- 10 to 120 parts by weight of Sb₂O₃ and/or of melamine cyanurate,
- 100 to 600 parts by weight of Mg(OH)₂, the sum of the above constituents being equal to 1000.

3. Flame-retardant thermoplastic compositions in accordance with Claim 2, characterised in that they additionally comprise:
- 0 to 300 parts by weight of glass fibres,
- 0 to 150 parts by weight of inorganic filler(s),
- 0 to 70 parts by weight of additive(s),
the sum of all the constituents of these compositions being equal to 1000.

4. Thermoplastic compositions in accordance with Claim 3, characterised in that the additives are chosen from dye(s), lubricating agent(s), heat-stabilising agents, light-stabilising agents, antioxidising agents, plasticisers, agents for improving impact strength, anti-UV agents, antistatic agents and/or pigments.

5. Flame-retardant thermoplastic compositions according to either of Claims 1 and 2, characterised in that the polyamide(s) is aliphatic and preferably PA-6, PA-6,6, PA-4,6, PA-11, PA-12, PA-12,12.

6. Flame-retardant thermoplastic compositions according to either of Claims 1 and 2, characterised in that the polyamide(s) consists of aliphatic, aromatic and cycloaliphatic segments and is preferably obtained from:
- at least one lactam and/or one amino acid, preferably dodecalactam;
- tere- and isophthalic acids;
- at least one cycloaliphatic diamine, preferably bis(4-aminocyclohexyl)methane.

7. Flame-retardant thermoplastic compositions according to either of Claims 1 and 2, characterised in that the polyamide(s) is a polyamide-based thermoplastic elastomer.

8. Flame-retardant thermoplastic compositions according to any one of Claims 1 to 7, characterised in that the polyamide is a mixture and/or alloy of polyamide(s) with one or a number of thermoplastic polymers and especially polyolefins such as PP, PE, EPR or EPDM, optionally maleinised.

9. Flame-retardant thermoplastic compositions according to any one of Claims 2 to 8, characterised in that they comprise:
- 300 to 450 parts by weight of polyamide(s), preferably PA-6,
- 20 to 60 parts by weight of Sb₂O₃ and/or of melamine cyanurate,
- 300 to 500 parts by weight of Mg(OH)₂,
- 150 to 300 parts by weight of glass fibres,
- 0 to 150 parts by weight of inorganic filler(s),
- 10 to 30 parts by weight of additive(s),
the sum of the above constituents being equal to 1000.

10. Process for the preparation of the compositions of Claims 1 to 9, characterised in that the various constituents are mixed in the pulverulent or dry blend form, this mixture and the polyamide(s) granules are introduced into the extruder and then the glass fibres are optionally incorporated in the extruder in the molten material.

11. Process in accordance with Claim 10, characterised in that a mixture comprising only a part of the constituents is introduced in the pulverulent form into the extruder, at the same time as the polyamide(s) granules, and then the remainder of the constituents are incorporated in the pulverulent form in the molten material before, after or at the same time as the glass fibres.

12. Process in accordance with Claim 11, characterised in that the Mg(OH)₂ is incorporated twice, the first time with the polyamide and the second time with the glass fibres.

13. Use of the flame-retardant thermoplastic compositions of Claims 1 to 6 alone or mixed with other polymers for the production of moulded or extruded articles, of films, of fibres or of composite materials and especially for the production of electrical equipment components and especially arc housings.

## Claims (Claims for the following Contracting State(s): BE CH, DE, FR, GB, IT, LI, NL, SE)

1. Flame-retardant thermoplastic compositions, characterised in that they comprise a mixture of polyamide(s), of Sb₂O₃ and/or of melamine cyanurate and of Mg(OH)₂,
contain neither halogenated compounds nor phosphorous derivatives,
the composition composed of a mixture
- of 52 parts by weight of polypropylene with a melt index of 9 g/10 min and of PA-6 with a relative viscosity of 2.2 with a PP/PA weight ratio of 70/30
- of 3 parts by weight of Polytac® H-1100P modified polypropylene
- of 40 parts by weight of Mg(OH)₂
- of 5 parts by weight of Sb₂O₃
- and of 40 parts by weight of glass fibres being excluded.

2. Thermoplastic compositions according to Claim 1, characterised in that they comprise:
- 280 to 750 parts by weight of polyamide(s),
- 10 to 120 parts by weight of Sb₂O₃ and/or of melamine cyanurate,
- 100 to 600 parts by weight of Mg(OH)₂,
the sum of the above constituents being equal to 1000.

3. Flame-retardant thermoplastic compositions in accordance with Claim 2, characterised in that they additionally comprise:
- 0 to 300 parts by weight of glass fibres,
- 0 to 150 parts by weight of inorganic filler(s),
- 0 to 70 parts by weight of additive(s),
the sum of all the constituents of these compositions being equal to 1000.

4. Thermoplastic compositions in accordance with Claim 3, characterised in that the additives are chosen from dye(s), lubricating agent(s), heat-stabilising agents, light-stabilising agents, antioxidising agents, plasticisers, agents for improving impact strength, anti-UV agents, antistatic agents and/or pigments.

5. Flame-retardant thermoplastic compositions according to either of Claims 1 and 2, characterised in that the polyamide(s) is aliphatic and preferably PA-6, PA-6,6, PA-4,6, PA-11, PA-12, PA-12,12.

6. Flame-retardant thermoplastic compositions according to either of Claims 1 and 2, characterised in that the polyamide(s) consists of aliphatic, aromatic and cycloaliphatic segments and is preferably obtained from:
- at least one lactam and/or one amino acid, preferably dodecalactam;
- tere- and isophthalic acids;
- at least one cycloaliphatic diamine, preferably bis (4-aminocyclohexyl)methane.

7. Flame-retardant thermoplastic compositions according to either of Claims 1 and 2, characterised in that the polyamide(s) is a polyamide-based thermoplastic elastomer.

8. Flame-retardant thermoplastic compositions according to any one of Claims 1 to 7, characterised in that the polyamide is a mixture and/or alloy of polyamide(s) with one or a number of thermoplastic polymers and especially polyolefins such as PP, PE, EPR or EPDM, optionally maleinised.

9. Flame-retardant thermoplastic compositions according to any one of Claims 2 to 8, characterised in that they comprise:
- 300 to 450 parts by weight of polyamide(s), preferably PA-6,
- 20 to 60 parts by weight of Sb₂O₃ and/or of melamine cyanurate,
- 300 to 500 parts by weight of Mg(OH)₂,
- 150 to 300 parts by weight of glass fibres,
- 0 to 150 parts by weight of inorganic filler(s),
- 10 to 30 parts by weight of additive(s),
the sum of the above constituents being equal to 1000.

10. Process for the preparation of the compositions of Claims 1 to 9, characterised in that the various constituents are mixed in the pulverulent or dry blend form, this mixture and the polyamides(s) granules are introduced into the extruder and then the glass fibres are optionally incorporated in the extruder in the molten material.

11. Process in accordance with Claim 10, characterised in that a mixture comprising only a part of the constituents is introduced in the pulverulent form into the extruder, at the same time as the polyamide(s) granules, and then the remainder of the constituents are incorporated in the pulverulent form in the molten material before, after or at the same time as the glass fibres.

12. Process in accordance with Claim 11, characterised in that the Mg(OH)₂ is incorporated twice, the first time with the polyamide and the second time with the glass fibres.

13. Use of the flame-retardant thermoplastic compositions of Claims 1 to 6 alone or mixed with other polymers for the production of moulded or extruded articles, of films, of fibres or of composite materials and especially for the production of electrical equipment components and especially arc housings.
